# EUROPEAN PATENT APPLICATION

(11) **EP 4 682 492 A1**
(43) Date of publication of application: **21.01.2026**
(21) Application number: 24770565.0
(22) Date of filing: 01.03.2024
(51) Int. Cl.: G01K 7/00, G01K 7/02, G01K 13/08, H01R 39/28

(54) **TEMPERATURE DETECTION STRUCTURE**

(30) Priority: 15.03.2023 JP 2023040534
(71) Applicant: Eagle Industry Co., Ltd., Minato-ku Tokyo 105-8587 (JP)
(72) Inventor: FURUKAWA Yasunari, Tokyo 105-8587 (JP); ETO Hayata, Tokyo 105-8587 (JP); HAYATA Mamoru, Tokyo 105-8587 (JP); KAMITANI Masashi, Tokyo 105-8587 (JP)
(74) Representative: Seifert, Ruth
(86) International application number: PCT/JP2024/007730
(87) International publication number: WO 2024/190454

(57) **Abstract**

To provide a temperature detection structure including a thermocouple capable of measuring temperature with high accuracy.

The temperature detection structure is provided with: a first rotating connection portion RP1 at which a first measurement-point-side thermocouple conductor 12P and a first rotating-side metal 13P are connected; a second rotating connection portion RM1 at which a second measurement-point-side thermocouple conductor 12M and a second rotating-side metal 13M are connected; a first fixed connection portion FP1 at which a first temperature-measuring-instrument-side thermocouple conductor 16P and a first fixed-side metal 15P are connected; and a second fixed connection portion FM1 at which a second temperature-measuring-instrument-side thermocouple conductor 16M and a second fixed-side metal 15M are connected.

## Description

### {TECHNICAL FIELD}

The present invention relates to a temperature detection structure including a thermocouple, for example, a temperature detection structure that is applied to rotating equipment.

### {BACKGROUND ART}

A temperature detection structure including a thermocouple for measuring temperature is known in various industrial fields. In the thermocouple, thermoelectromotive force is generated due to the temperature difference between a measurement point at which one ends of two types of metal are in contact with each other, and a temperature measuring instrument side on which the other ends of the two types of metal are connected. With the thermoelectromotive force, the temperature detection structure can measure the temperature at the measurement point. Such a temperature detection structure is also known to be applied to rotating equipment.

For example, a temperature detection structure described in Patent Citation 1 is provided to measure the temperature of a substrate that is heated by a high-frequency coil in vapor deposition equipment as rotating equipment suitable for manufacturing a semiconductor.

In the temperature detection structure, an electrode portion (+) to which the positive side of a thermocouple extending from a measurement point is connected and a terminal to which the positive side of the thermocouple extending from a temperature controller is connected are electrically connected via a conductive ball disposed to be rollable. The electrode portion (+) rotates together with the substrate in response to the rotation of the motor. In addition, an electrode portion (-) to which the negative side of the thermocouple extending from the measurement point is connected and a terminal to which the negative side of the thermocouple extending from the temperature controller is connected are electrically connected via a conductive ball disposed to be rollable. The electrode portion (-) rotates together with the substrate in response to the rotation of the motor.

### {CITATION LIST}

### {Patent Literature}

Patent Citation 1: JP 04-337270 A (Pages 2 and 3, FIG. 1)

### {SUMMARY OF INVENTION}

### {Technical Problem}

In the temperature detection structure including the thermocouple as described in Patent Citation 1, the rollable balls are disposed to conduct electricity to a rotating portion, thereby preventing the generation of abrasion powder during use.

However, in Patent Citation 1, the electrode portions, the terminals, the balls, and other components are made of a material different from the thermocouple, so that the thermoelectromotive force different from that generated in the thermocouple may be generated in these components. Unfortunately, an error between the temperature measured by the thermocouple and the actual temperature on the measurement point side may occur.

The present invention has been made in view of such problems, and an object of the present invention is to provide a temperature detection structure including a thermocouple capable of measuring temperature with high accuracy.

### {Solution to Problem}

In order to solve the foregoing problems, a temperature detection structure according to the present invention includes: a temperature-measuring-instrument-side thermocouple including a first temperature-measuring-instrument-side thermocouple conductor and a second temperature-measuring-instrument-side thermocouple conductor to be electrically connected to a temperature measuring instrument; a first fixed electrode to which the first temperature-measuring-instrument-side thermocouple conductor is electrically connected; a second fixed electrode to which the second temperature-measuring-instrument-side thermocouple conductor is electrically connected; a measurement-point-side thermocouple including a first measurement-point-side thermocouple conductor and a second measurement-point-side thermocouple conductor and having a measurement point at which they are connected; a first rotating electrode to which the first measurement-point-side thermocouple conductor is electrically connected, the first rotating electrode disposed so as to be rotatable relative to the first fixed electrode; a second rotating electrode to which the second measurement-point-side thermocouple conductor is electrically connected, the second rotating electrode disposed so as to be rotatable relative to the second fixed electrode; a first connector electrically connecting the first fixed electrode and the first rotating electrode; and a second connector electrically connecting the second fixed electrode and the second rotating electrode. The temperature detection structure further includes a first rotating-side metal electrically connecting the first measurement-point-side thermocouple conductor and the first rotating electrode, a second rotating-side metal electrically connecting the second measurement-point-side thermocouple conductor and the second rotating electrode, a first fixed-side metal electrically connecting the first temperature-measuring-instrument-side thermocouple conductor and the first fixed electrode, and a second fixed-side metal electrically connecting the second temperature-measuring-instrument-side thermocouple conductor and the second fixed electrode. The temperature detection structure is provided with a first rotating connection portion at which the first measurement-point-side thermocouple conductor and the first rotating-side metal are connected, a second rotating connection portion at which the second measurement-point-side thermocouple conductor and the second rotating-side metal are connected, a first fixed connection portion at which the first temperature-measuring-instrument-side thermocouple conductor and the first fixed-side metal are connected, and a second fixed connection portion at which the second temperature-measuring-instrument-side thermocouple conductor and the second fixed-side metal are connected. According to the aforesaid feature of the present invention, the first rotating connection portion, the second rotating connection portion, the first fixed connection portion, and the second fixed connection portion are provided in a uniform heat environment, so that the temperature detection structure can reduce the influence of the temperature of a first conductive portion interposed between the first rotating connection portion and the first fixed connection portion, and the influence of the temperature of a second conductive portion interposed between the second rotating connection portion and the second fixed connection portion. Therefore, the temperature detection structure can measure temperature with high accuracy.

It may be preferable that the first fixed connection portion and the second fixed connection portion are disposed on one end side in an axial direction of a stator including the first fixed electrode and the second fixed electrode, and the first rotating connection portion and the second rotating connection portion are disposed on one end side in the axial direction of a rotor including the first rotating electrode and the second rotating electrode. According to this preferable configuration, the temperature detection structure can provide the first rotating connection portion, the second rotating connection portion, the first fixed connection portion, and the second fixed connection portion in a uniform heat environment with a simple structure.

It may be preferable that the first rotating connection portion, the second rotating connection portion, the first fixed connection portion, and the second fixed connection portion are provided within a space in communication with an atmosphere or in the atmosphere. According to this preferable configuration, the atmosphere has high thermal insulation properties. Therefore, the temperature detection structure can prevent the transmission of heat on the rotor side and heat on the stator side to the rotating contacts and fixed contacts.

It may be preferable that the first measurement-point-side thermocouple conductor and the first rotating-side metal are attached to a first rotating plate fixed to the rotor, the second measurement-point-side thermocouple conductor and the second rotating-side metal are attached to a second rotating plate fixed to the rotor, the first temperature-measuring-instrument-side thermocouple conductor and the first fixed-side metal are attached to a first fixed plate fixed to the stator, and the second temperature-measuring-instrument-side thermocouple conductor and the second fixed-side metal are attached to a second fixed plate fixed to the stator. According to this preferable configuration, the temperature detection structure can prevent movement of the first rotating connection portion, the second rotating connection portion, the first fixed connection portion, and the second fixed connection portion during the rotation of the rotor relative to the stator.

It may be preferable that respective heat insulation portions are provided between the rotor and the first rotating plate, between the rotor and the second rotating plate, between the stator and the first fixed plate, and between the stator and the second fixed plate. According to this preferable configuration, the temperature detection structure can prevent the transmission of heat from the rotor and heat from the stator to the first rotating connection portion, the second rotating connection portion, the first fixed connection portion, and the second fixed connection portion.

It may be preferable that the first rotating plate, the second rotating plate, the first fixed plate, and the second fixed plate are made of metal, and respective insulation portions are provided between the first rotating plate and the second rotating plate, and between the first fixed plate and the second fixed plate. According to this preferable configuration, the temperature detection structure can ensure electrical conductivity in the first rotating connection portion, the second rotating connection portion, the first fixed connection portion, and the second fixed connection portion and they can be firmly fixed to the rotating plates and the fixed plates.

It may be preferable that the first rotating plate and the second rotating plate form a single rotating plate made of an insulating material, and the first fixed plate and the second fixed plate form a single fixed plate made of an insulating material. According to this preferable configuration, the temperature detection structure can be easily configured while providing a high degree of freedom in the arrangement of the first rotating connection portion, the second rotating connection portion, the first fixed connection portion, and the second fixed connection portion.

It may be preferable that the first connector includes a first current collector rotatable while in contact with an outer peripheral surface of the first rotating electrode and an inner peripheral surface of the first fixed electrode, the second connector includes a second current collector rotatable while in contact with an outer peripheral surface of the second rotating electrode and an inner peripheral surface of the second fixed electrode, the first rotating electrode, the first fixed electrode, and the first current collector constitute a first slip ring, and the second rotating electrode, the second fixed electrode, and the second current collector constitute a second slip ring. According to this preferable configuration, the temperature detection structure includes the first slip ring and the second slip ring that include the first current collector and the second current collector that can rotate on their own axes, respectively, which prevents abrasion and stabilizes the electrical connection, enabling high accurate temperature measurement.

It may be preferable that the first slip ring and the second slip ring are stacked in the axial direction. According to this preferable configuration, the temperature detection structure can be arranged such that the first rotating connection portion, the second rotating connection portion, the first fixed connection portion, and the second fixed connection portion overlap the first slip ring and the second slip ring when viewed in the axial direction. Accordingly, the temperature detection structure can be configured compactly. Therefore, the temperature detection structure can further increase the accuracy of temperature measurement.

It may be preferable that the first rotating-side metal, the second rotating-side metal, the first fixed-side metal, and the second fixed-side metal are metals having less thermoelectromotive force than the first measurement-point-side thermocouple conductor, the second measurement-point-side thermocouple conductor, the first temperature-measuring-instrument-side thermocouple conductor, and the second temperature-measuring-instrument-side thermocouple conductor. According to this preferable configuration, the temperature detection structure can further improve the accuracy of temperature measurement.

### {BRIEF DESCRIPTION OF DRAWINGS}

FIG. 1 is a perspective view of a temperature detection structure according to a first embodiment of the present invention.
FIG. 2 is a sectional view of the temperature detection structure according to the first embodiment.
FIG. 3 is a sectional view of a temperature detection structure according to a second embodiment of the present invention.
FIG. 4 is a sectional view of a temperature detection structure according to a third embodiment of the present invention.
FIG. 5 is a cross sectional view taken along arrow A in FIG. 4.
FIG. 6 is an enlarged view of the main parts of a modification of the temperature detection structure according to the third embodiment.
FIG. 7 is a sectional view of a temperature detection structure according to a fourth embodiment of the present invention.
FIG. 8 is a sectional view of a temperature detection structure according to a fifth embodiment of the present invention.
FIG. 9 is a sectional view of a temperature detection structure according to a sixth embodiment of the present invention.

### {DESCRIPTION OF EMBODIMENTS}

Modes for implementing a temperature detection structure according to the present invention will be described below based on embodiments.

### {First embodiment}

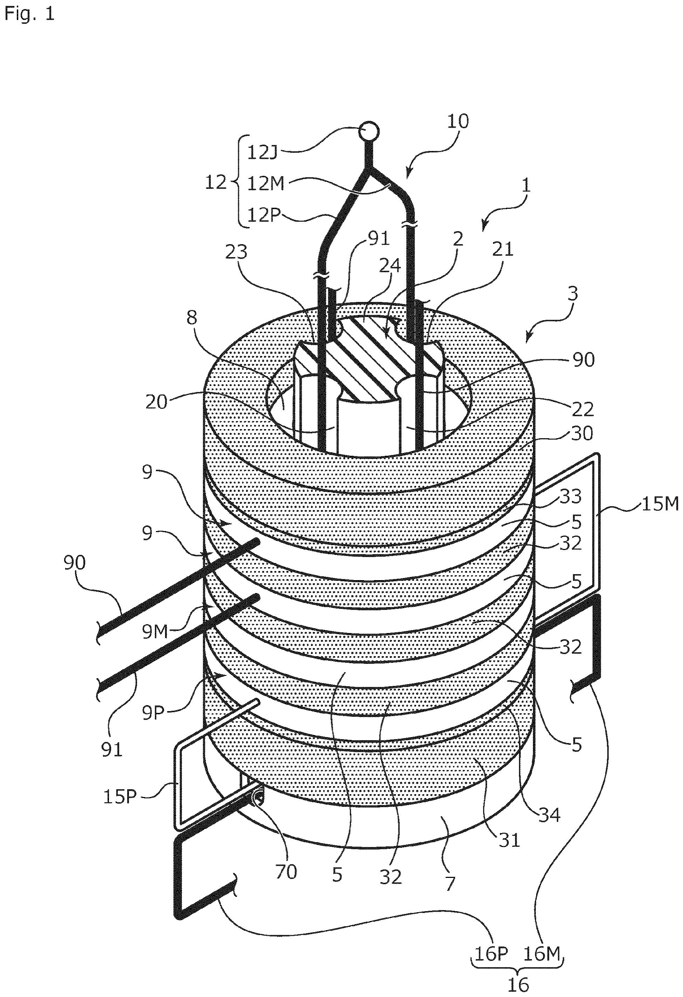

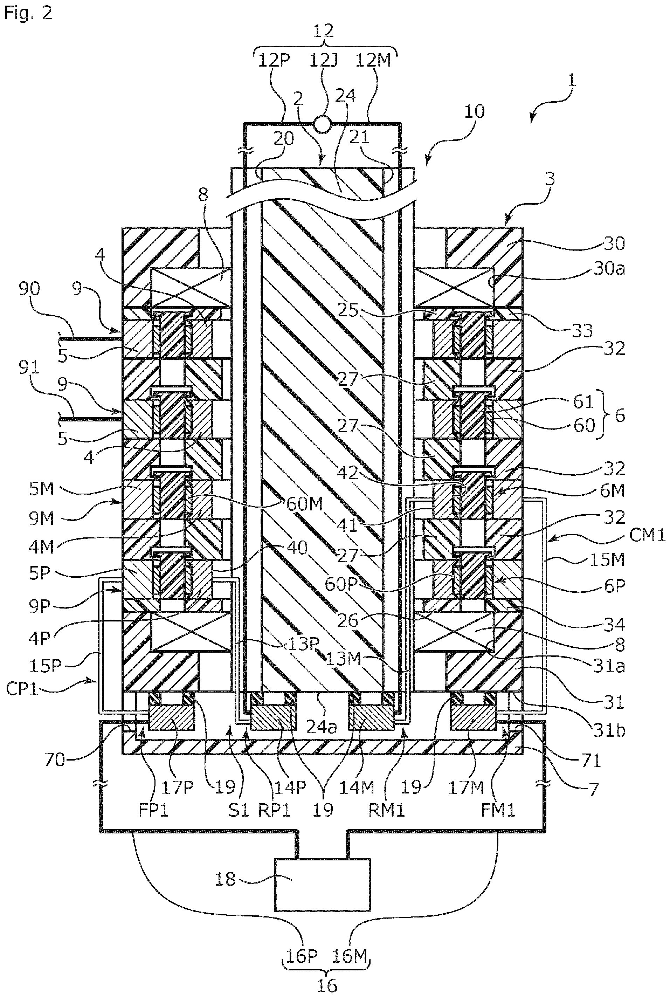

A temperature detection structure according to a first embodiment of the present invention will be described with reference to FIGS. 1 and 2. Hereinafter, the description will be made based on the assumption that the top and bottom when viewed from the front in FIG. 2 is described below as the top and bottom of the temperature detection structure.

A temperature detection structure 10 of the present embodiment is applied to, for example, a rotating machinery 1 in a semiconductor manufacturing machine as rotating equipment, and is used to measure the temperature of a semiconductor substrate that is heated by a temperature regulator. First, the rotating machinery 1 will be described.

As illustrated in FIGS. 1 and 2, the rotating machinery 1 mainly includes a rotor 2, a stator 3, a plurality of connectors 6 (see FIG. 2), a cap 7, and two bearings 8 (see FIG. 2), and is provided with four sets of slip rings 9. The rotating machinery 1 is used in a vertical orientation.

Incidentally, the bottom slip ring 9 illustrated in FIGS. 1 and 2 is a positive-side slip ring 9P as a first slip ring, and the second slip ring 9 from the bottom is a negative-side slip ring 9M as a second slip ring, and they have substantially the same configuration as the other slip rings 9. Therefore, unless otherwise specified, they will be described as the slip rings 9.

In addition, the bottom connector 6 illustrated in FIG. 2 is a positive-side connector 6P as a first connector, and the second connector 6 from the bottom is a negative-side connector 6M as a second connector, and they have substantially the same configuration as the other connectors 6. Therefore, unless otherwise specified, they will be described as the connectors 6.

The rotor 2 mainly includes a rotating shaft 24, an rotor-side upper spacer 25, a rotor-side lower spacer 26, three rotor-side holders 27, and four rotor-side electrodes 4 (see FIG. 2) as rotating electrodes.

Incidentally, the bottom rotor-side electrode 4 illustrated in FIG. 2 is a positive-side rotor-side electrode 4P as a first rotating electrode, and the second rotor-side electrode 4 from the bottom is a negative-side rotor-side electrode 4M as a second rotating electrode, and they have substantially the same configuration as the other rotor-side electrodes 4. Therefore, unless otherwise specified, they will be described as the rotor-side electrodes 4.

The rotating shaft 24 is made of an insulating material and is formed into a cylindrical shape. Incidentally, the structure of the temperature regulator side of the rotating shaft 24 is not illustrated.

Four through grooves 20 to 23 are formed on a radially outer side of the rotating shaft 24. The through groove 20 is formed into a U-shape when viewed in an axial direction which is recessed from the outer peripheral surface of the rotating shaft 24 toward a radially inner side, is open toward the radially outer side, and extends through the rotating shaft 24 in the axial direction. The through groove 21 has substantially the same shape as the through groove 20, and is formed on the opposite side of through groove 20 in a radial direction. The through grooves 22, 23 are formed between the through grooves 20, 21 in a circumferential direction (see FIG. 1).

As illustrated in FIG. 2, the rotor-side upper spacer 25 is an annular thin plate made of an insulating material. The rotor-side upper spacer 25 has an inner diameter that is substantially the same as the outer diameter of the rotating shaft 24, and is fitted and fixed onto the rotating shaft 24. In addition, the lower end of the rotor-side upper spacer 25 has a flange-shaped protrusion protruding toward the radially outer side from the outer peripheral surface. The rotor-side upper spacer 25 is disposed below the bearing 8 disposed on the upper side.

The rotor-side lower spacer 26 is an annular thin plate made of an insulating material. The rotor-side lower spacer 26 has an inner diameter that is substantially the same as the outer diameter of the rotating shaft 24, and is fitted and fixed onto the rotating shaft 24. The rotor-side lower spacer 26 is disposed above the bearing 8 disposed on the lower side.

The rotor-side holders 27 are made of an insulating material and are formed into an annular shape. The rotor-side holders 27 have an inner diameter that is substantially the same as the outer diameter of the rotating shaft 24, and the rotor-side holders 27 are fitted and fixed onto the rotating shaft 24. In addition, the lower ends of the rotor-side holders 27 have annular slits recessed toward the radially inner side from the outer peripheral surface and are open in a radially outward direction.

In addition, the rotor-side holders 27 have a slightly larger outer diameter than the rotor-side electrodes 4 as will be described later.

The rotor-side electrodes 4 are made of a copper alloy and are formed into a ring shape. The respective rotor-side electrodes 4 are disposed between the rotor-side upper spacer 25 and the top rotor-side holder 27, between the top rotor-side holder 27 and the second rotor-side holder 27 from the top, between the second rotor-side holder 27 from the top and the bottom rotor-side holder 27, and between the bottom rotor-side holder 27 and the rotor-side lower spacer 26.

The rotor-side electrodes 4 have an inner diameter that is substantially the same as the outer diameter of the rotating shaft 24, and are fitted and fixed onto the rotating shaft 24. Therefore, the rotor-side electrodes 4 rotate together with the rotating shaft 24. Incidentally, when the rotating shaft is made of a conductive material such as metal, the rotor-side electrodes may be fixed to the rotating shaft via an insulator, or a portion of the rotor-side electrodes that comes into contact with the rotating shaft may be made of an insulating material.

In addition, four notches 40, 41 are formed on the radially inner side of the rotor-side electrodes 4. Incidentally, in the present embodiment, two of the four notches other than the notches 40, 41 are not illustrated.

The notch 40 is formed into a U-shape when viewed in the axial direction that is open toward the radially inner side and extends through the rotor-side electrodes 4 in the axial direction. In addition, the notch 40 is aligned with the through groove 20 in the rotating shaft 24. The notch 41 has substantially the same shape as the notch 40, and is aligned with the through groove 21 in the rotating shaft 24. The remaining two notches (not illustrated) are aligned with the through groove 22 and the through groove 23 in the rotating shaft 24.

In addition, annular grooves 42 are formed on the radially outer side of the rotor-side electrodes 4, and is recessed toward the radially inner side and is open in the radially outward direction.

As illustrated in FIGS. 1 and 2, the stator 3 mainly includes an upper body 30, a lower body 31, three stator-side holders 32, a stator-side upper spacer 33, a stator-side lower spacer 34, and four stator-side electrodes 5 as fixed electrodes. Incidentally, in FIG. 1, the upper body 30, the lower body 31, the three stator-side holders 32, the stator-side upper spacer 33, and the stator-side lower spacer 34 are marked with dot patterns.

Incidentally, the bottom stator-side electrode 5 illustrated in FIG. 2 is a positive-side stator-side electrode 5P as a first fixed electrode, and the second stator-side electrode 5 from the bottom is a negative-side stator-side electrode 5M as a second fixed electrode, and they have substantially the same configuration as the other stator-side electrodes 5. Therefore, unless otherwise specified, they will be described as the stator-side electrodes 5.

As illustrated in FIG. 2, the upper body 30 is made of an insulating material and is formed into an annular shape with an L-shaped cross section. A recess portion 30a is formed in the center of the upper body 30 in the radial direction, and is recessed toward the upper side in the axial direction from the lower end face of the upper body 30 and is open toward the lower side. The bearing 8 is fitted into the recess portion 30a. In addition, a through-hole extending vertically is in communication with the center of the recess portion 30a in the radial direction. The through-hole has a longer diameter than the rotating shaft 24.

The lower body 31 is made of an insulating material and is formed into an annular shape with an L-shaped cross section. A recess portion 31a is formed in the center of the lower body 31 in the radial direction, and is recessed toward the lower side in the axial direction from the upper end face of the lower body 31 and is open toward the upper side. The bearing 8 is fitted into the recess portion 31a. In addition, a through-hole extending vertically is in communication with the center of the recess portion 31a in the radial direction. The through-hole has a longer diameter than the rotating shaft 24.

The stator-side holders 32 are made of an insulating material and are formed into an annular shape. The stator-side holders 32 have a slightly smaller inner diameter than the stator-side electrodes 5 as will be described later.

In addition, the lower ends of the stator-side holders 32 have annular slits recessed toward the radially outer side from the inner peripheral surfaces and are open in a radially inward direction. The slits are disposed opposite to the slits in the rotor-side holders 27.

The stator-side upper spacer 33 is an annular thin plate made of an insulating material. The stator-side upper spacer 33 has substantially the same inner diameter as the stator-side holders 32. In addition, the stator-side upper spacer 33 has substantially the same outer diameter as the lower body 31.

After the bearing 8 is fitted into the recess portion 30a of the upper body 30, the stator-side upper spacer 33 is fixed to the upper body 30.

In addition, the lower end of the stator-side upper spacer 33 has a protrusion protruding toward the radially inner side from the inner peripheral surface. This protrusion is disposed opposite to the protrusion on the rotor-side upper spacer 25.

The stator-side lower spacer 34 is an annular thin plate made of an insulating material. The stator-side lower spacer 34 has substantially the same inner diameter as the stator-side holders 32. In addition, the stator-side lower spacer 34 has substantially the same outer diameter as the lower body 31.

After the bearing 8 is fitted into the recess portion 31a of the lower body 31, the stator-side lower spacer 34 is fixed to the lower body 31.

The stator-side electrodes 5 are made of a copper alloy and are formed into a ring shape. The respective stator-side electrodes 5 are disposed between the stator-side upper spacer 33 and the top stator-side holder 32, between the top stator-side holder 32 and the second stator-side holder 32 from the top, between the second stator-side holder 32 from the top and the bottom stator-side holder 32, and between the bottom stator-side holder 32 and the stator-side lower spacer 34, and are fixed to the adjacent stator-side holders 32 and spacers 33, 34.

In addition, the stator-side electrode 5 has an inner diameter that is longer than the outer diameter of the rotor-side electrodes 4.

Each of the slip rings 9 is composed of one of the rotor-side electrodes 4 (see FIG. 2), one of the stator-side electrodes 5, and the multiple (for example, eight) connectors 6 (see FIG. 2).

The connectors 6 are disposed between outer peripheral surfaces of the rotor-side electrodes 4 and inner peripheral surfaces of the stator-side electrode 5.

The connectors 6 includes a roller current collector 60 and shaft members 61. Incidentally, the connectors of the present invention may include only the roller current collectors 60.

In addition, the roller current collector 60 of the positive-side connector 6P illustrated in FIG. 2 is a positive-side roller current collector 60P as a first current collector, and the roller current collector 60 of the negative-side connector 6M is a negative-side roller current collector 60M as a second current collector. Therefore, unless otherwise specified, they will be described as the roller current collectors 60.

The roller current collectors 60 are made of a copper alloy and are formed into a cylindrical shape. The roller current collectors 60 are rotatably supported by the shaft members 61 and are disposed in the grooves 42 in the rotor-side electrodes 4. Therefore, the roller current collectors 60 follow in response to the rotation of the rotor-side electrodes 4, that is, rotate around the axis of the shaft members 61. The top and bottom of the grooves 42 protrude toward the radially outer side, so that the roller current collectors 60 are restricted from moving in the axial direction.

Incidentally, the grooves in which the roller current collectors 60 are disposed are not limited to the grooves 42 formed in the rotor-side electrodes 4, however, may also be formed in the stator-side electrodes 5, or may only be formed in the stator-side electrodes 5, and may be changed as appropriate. In addition, instead of grooves, annular steps may be provided in the rotor-side electrodes 4 and the stator-side electrodes 5 so as to face each other in the axial direction, and the roller current collectors 60 may be interposed between the annular steps to hold the roller current collectors 60 in the axial direction.

The roller current collectors 60 have an outer diameter that is slightly larger than the dimension in the radial direction between the outer peripheral surfaces of the rotor-side electrodes 4 and the inner peripheral surfaces of the stator-side electrodes 5. Therefore, the roller current collectors 60 are elastically deformed and can rotate, that is, rotate on their own axes, while being in contact with the outer peripheral surfaces of the rotor-side electrodes 4 and the inner peripheral surfaces of the stator-side electrodes 5. Incidentally, the shaft members 61 may be rotated together with the rotating shaft 24, and the roller current collectors 60 may perform so-called planetary motion in which they revolve while rotating on their own axes.

The shaft members 61 are made of an insulating material and are formed into a columnar shape with a T-shaped cross section. The upper end portions of the shaft members 61, which are formed into a flange shape, are disposed between the protrusions of the rotor-side upper spacer 25 and the upper body 30 and the bearing 8 or in the slits of the rotor-side holders 27 and the stator-side holders 32. Therefore, the shaft members 61 are restricted from moving in the axial direction.

Incidentally, at least one of the stator-side lower spacer 34 and the rotor-side lower spacer 26 may have a shaft portion capable of rotatably supporting the shaft member 61, a recess portion into which the lower end of the shaft member 61 is, or the like. The same applies to the stator-side holders 32 other than the bottom one and the rotor-side holders 27 other than the bottom one. In addition, without providing the shaft member, the roller current collector 60 may be directly rotatably supported by a shaft portion provided on the lower spacer or the holder. In such a manner, the positioning means and holding means for the roller current collector 60 may be changed as appropriate.

The top slip ring 9 and the second slip ring 9 from the top are connected to conductors 90, 91 electrically connected to a temperature regulator (not illustrated). Incidentally, the conductors 90, 91 may be connected to supply power to equipment other than the temperature regulator. The bottom positive-side slip ring 9P and the second negative-side slip ring 9M from the bottom will be described later.

The cap 7 is made of an insulating material and is formed into a cylindrical shape with a bottom, and is fixed to the lower portion of the lower body 31. The cap 7, together with the rotating shaft 24, and the lower body 31, define a uniform heat area S1. The uniform heat area S1 is one continuous uniform area, and is in a uniform heat environment.

In addition, the peripheral wall of the cap 7 has through-holes 70, 71 at opposite ends in the radial direction extending therethrough in the radial direction. The uniform heat area S1 is in communication with a space on the atmosphere side through the through-holes 70, 71, and is located at the lower ends in the axial direction of the rotating shaft 24 constituting the rotor 2 and the lower body 31 constituting the stator 3.

In addition, the rotating machinery 1 is in a vertical orientation. Accordingly, heat generated at the contact portions between the rotor-side electrodes 4 and the roller current collectors 60 rises through, for example, the through grooves 20 to 23 in the rotating shaft 24 and is discharged to the outside of the stator 3. The uniform heat area S1 is in communication with the gap between the rotating shaft 24 and the rotor-side electrodes 4, but is provided on the lower side of the rotating shaft 24 and the rotor-side electrodes 4, so that the heat generated at the contact points between the rotor-side electrodes 4 and the roller current collectors 60 is less likely to flow into the uniform heat area S1. Further, during rotation, the gas between the rotating shaft 24 and the rotor-side electrodes 4 becomes an annular flow around the rotating shaft 24 and stays between the rotating shaft 24 and the rotor-side electrodes 4, so that the temperature of the uniform heat area S1 on the lower side does not rise much.

Further, as the hot air is discharged to the outside of the stator 3, that is, into the space on the atmosphere side, relatively low-temperature air can be introduced from the through-holes 70, 71. The heat generated at the contact portions between the rotor-side electrodes 4 and the roller current collectors 60 is unlikely to flow into the uniform heat area S1, as well as, the temperature in the uniform heat area S1 is likely to be maintained at substantially the same temperature as the atmosphere.

Additionally, the rotation of the rotating shaft 24 allows the heat generated at the contact portions between the stator-side electrodes 5 and the roller current collectors 60 to be efficiently discharged to the space on the atmosphere side.

Accordingly, the temperature in the uniform heat area S1 is prevented from increasing excessively, the temperature in the uniform heat area S1 is uniform, and the uniform heat area S1 is a space different in temperature environment from the gap between the rotating shaft 24 and the rotor-side electrodes 4.

Incidentally, the number and shape of the through-holes formed in the cap may be changed as appropriate. The uniform heat area is preferably in communication with the atmosphere; however, the through-holes may not be provided. Further, when the uniform heat area is ensured and is filled with the atmosphere, for example, the cap may not be provided. That is, a positive-side rotor-side contact RP1, a negative-side rotor-side contact RM1, a positive-side stator-side contact FP1, and a negative-side stator-side contact FM1 as will be described later may be disposed exposed to the atmosphere.

In addition, the temperature at all points in the uniform heat area is not required to be uniform, however, it is preferable that the temperatures at a rotating contact and a fixed contact as will be described later are uniform. In addition, in the present invention, "temperatures are uniform" or "uniform heat temperature" means if the difference in temperature is within a range of ±5 degrees.

Next, the configuration of the temperature detection structure 10 will be described. The temperature detection structure 10 includes a rotor-side thermocouple 12 as a measurement-point-side thermocouple, a positive-side rotor-side dissimilar metal 13P as a first rotating-side metal, a negative-side rotor-side dissimilar metal 13M as a second rotating-side metal, a positive-side rotating plate 14P as a first rotating plate, a negative-side rotating plate 14M as a second rotating plate, a positive-side slip ring 9P as a first slip ring, a negative-side slip ring 9M as a second slip ring, a positive-side stator-side dissimilar metal 15P as a first fixed-side metal, a negative-side stator-side dissimilar metal 15M as a second fixed-side metal, a stator-side thermocouple 16 as a temperature-measuring-instrument-side thermocouple, a positive-side fixed plate 17P as a first fixed plate, a negative-side fixed plate 17M as a second fixed plate, a temperature measuring instrument 18, and four heat insulation portions 19.

The rotor-side thermocouple 12 indicated by the bold black line in FIGS. 1 and 2 includes a positive-side measurement-point-side thermocouple conductor 12P as a first measurement-point-side thermocouple conductor and a negative-side measurement-point-side thermocouple conductor 12M as a second measurement-point-side thermocouple conductor, and has a measurement point 12J which is a contact point therebetween.

The stator-side thermocouple 16 indicated by the bold black line in FIGS. 1 and 2 includes a positive-side temperature-measuring-instrument-side thermocouple conductor 16P as a first temperature-measuring-instrument-side thermocouple conductor and a negative-side temperature-measuring-instrument-side thermocouple conductor 16M as a second temperature-measuring-instrument-side thermocouple conductor, and is connected to the temperature measuring instrument 18.

The rotor-side thermocouple 12 and the stator-side thermocouple 16 of the present embodiment are so-called K thermocouples. The positive-side measurement-point-side thermocouple conductor 12P of the rotor-side thermocouple 12 and the positive-side temperature-measuring-instrument-side thermocouple conductor 16P of the stator-side thermocouple 16 are made of chromel. The negative-side measurement-point-side thermocouple conductor 12M of the rotor-side thermocouple 12 and the negative-side temperature-measuring-instrument-side thermocouple conductor 16M of the stator-side thermocouple 16 are made of alumel. Incidentally, the thermocouples may be any type of thermocouples other than the K thermocouples. In addition, the stator-side thermocouple 16 may be a compensation conductor.

The positive-side rotor-side dissimilar metal 13P, the negative-side rotor-side dissimilar metal 13M, the positive-side stator-side dissimilar metal 15P, and the negative-side stator-side dissimilar metal 15M illustrated by white outline line in FIGS. 1 and 2 are made of copper.

The positive-side rotating plate 14P and the negative-side rotating plate 14M are separate terminal blocks. The positive-side rotating plate 14P and the negative-side rotating plate 14M are fixed to a lower end 24a, which is one end of the rotating shaft 24 in the axial direction, via the heat insulation portions 19, and are placed in the uniform heat area S1. The heat insulation portions 19 are heat insulators.

The positive-side fixed plate 17P and the negative-side fixed plate 17M are separate terminal blocks. The positive-side fixed plate 17P and the negative-side fixed plate 17M are fixed to a lower end 31b, which is one end of the lower body 31 in the axial direction, via the heat insulation portions 19, and are placed in the uniform heat area S1.

The positive-side measurement-point-side thermocouple conductor 12P of the rotor-side thermocouple 12 extends through the through groove 20 in the rotating shaft 24 and is connected to the positive-side rotating plate 14P. The positive-side rotor-side dissimilar metal 13P is also connected to the positive-side rotating plate 14P. Accordingly, a positive-side rotor-side contact RP1 as a first rotating connection portion is configured.

In addition, the positive-side rotor-side dissimilar metal 13P extends through the through groove 20 in the rotating shaft 24 and is soldered to the inner peripheral surface of the notch 40 in the positive-side rotor-side electrode 4P.

Incidentally, the method of connecting the various conductors and dissimilar metals to the rotating electrodes and the fixed electrodes is not limited to soldering, however, may be welding, crimping, terminal connection, or may be changed as appropriate. Incidentally, in the following description, the various conductors and dissimilar metals are collectively referred to simply as the "various conductors."

The positive-side stator-side dissimilar metal 15P is soldered to the outer peripheral surface of the positive-side stator-side electrode 5P.

The positive-side stator-side dissimilar metal 15P extends through the through-hole 70 in the cap 7 and is connected to the positive-side fixed plate 17P. The positive-side temperature-measuring-instrument-side thermocouple conductor 16P of the stator-side thermocouple 16 extending through the through-hole 70 is also connected to the positive-side fixed plate 17P. Accordingly, a positive-side stator-side contact FP1 as a first fixed connection portion is configured.

As described above, the positive-side measurement-point-side thermocouple conductor 12P of the rotor-side thermocouple 12 and the positive-side temperature-measuring-instrument-side thermocouple conductor 16P of the stator-side thermocouple 16 are electrically connected by a positive-side conductive portion CP1 as a first conductive portion which is a different type of metal from the rotor-side thermocouple 12 and the stator-side thermocouple 16. The positive-side conductive portion CP1 is composed of the positive-side rotor-side dissimilar metal 13P, the positive-side rotor-side electrode 4P, the positive-side roller current collector 60P as the first current collector of the positive-side connector 6P, the positive-side stator-side electrode 5P, and the positive-side stator-side dissimilar metal 15P.

The negative-side measurement-point-side thermocouple conductor 12M of the rotor-side thermocouple 12 extends through the through groove 21 in the rotating shaft 24 and is connected to the negative-side rotating plate 14M. The negative-side rotor-side dissimilar metal 13M is also connected to the negative-side rotating plate 14M. Accordingly, a negative-side rotor-side contact RM1 as a second rotating connection portion is configured.

In addition, the negative-side rotor-side dissimilar metal 13M extends through the through groove 21 in the rotating shaft 24 and is soldered to the inner peripheral surface of the notch 41 in the negative-side rotor-side electrode 4M.

The negative-side stator-side dissimilar metal 15M is soldered to the outer peripheral surface of the negative-side stator-side electrode 5M.

The negative-side stator-side dissimilar metal 15M extends through the through-hole 71 in the cap 7 and is connected to the negative-side fixed plate 17M. The negative-side temperature-measuring-instrument-side thermocouple conductor 16M of the stator-side thermocouple 16 extending through the through-hole 71 is also connected to the negative-side fixed plate 17M. Accordingly, a negative-side stator-side contact FM1 as a second fixed connection portion is configured.

As described above, the negative-side measurement-point-side thermocouple conductor 12M of the rotor-side thermocouple 12 and the negative-side temperature-measuring-instrument-side thermocouple conductor 16M of the stator-side thermocouple 16 are electrically connected by a negative-side conductive portion CM1 as a second conductive portion which is a different type of metal from the rotor-side thermocouple 12 and the stator-side thermocouple 16. The negative-side conductive portion CM1 is composed of the negative-side rotor-side dissimilar metal 13M, the negative-side rotor-side electrode 4M, the negative-side roller current collector 60M as the second current collector of the negative-side connector 6M, the negative-side stator-side electrode 5M, and the negative-side stator-side dissimilar metal 15M.

In the temperature detection structure 10 of the present embodiment configured as described above, thermoelectromotive force is generated at the rotor-side thermocouple 12 and the stator-side thermocouple 16 according to the difference in temperature between the measurement point 12J and the temperature measuring instrument 18.

Now, in the rotating machinery 1 of the present embodiment, the positive-side rotor-side electrode 4P and the negative-side rotor-side electrode 4M are likely to be heated by the heat trapped in the stator 3. On the other hand, the positive-side stator-side electrode 5P and the negative-side stator-side electrode 5M are likely to release heat from the outer peripheral surfaces exposed to the atmosphere. Accordingly, in the rotating machinery 1 of the present embodiment, the difference in temperature is likely to occur between the positive-side rotor-side electrode 4P and the positive-side stator-side electrode 5P, and the difference in temperature is also likely to occur between the negative-side rotor-side electrode 4M and the negative-side stator-side electrode 5M.

In the temperature detection structure 10 of the present embodiment, the positive-side conductive portion CP1 and the negative-side conductive portion CM1 are made of a different type of metal from the rotor-side thermocouple 12 and the stator-side thermocouple 16. The positive-side rotor-side contact RP1 and the positive-side stator-side contact FP1, which are contacts between the positive-side conductive portion CP1 and the rotor-side thermocouple 12 and the stator-side thermocouple 16, and the negative-side rotor-side contact RM1 and the negative-side stator-side contact FM1, which are contacts between the negative-side conductive portion CM1 and the rotor-side thermocouple 12 and the stator-side thermocouple 16, are disposed in the uniform heat area S1.

In addition, the positive-side conductive portion CP1 and the negative-side conductive portion CM1 are configured with the same type of metals in combination and arrangement.

In the positive-side conductive portion CP1 and the negative-side conductive portion CM1 which satisfy these requirements, thermoelectromotive force is prevented from being generated regardless of the temperature in the uniform heat area S1.

Accordingly, even if the difference in temperature occurs between the positive-side rotor-side electrode 4P and the positive-side stator-side electrode 5P and the difference in temperature occurs between the negative-side rotor-side electrode 4M and the negative-side stator-side electrode 5M, thermoelectromotive force is prevented from being generated in the positive-side conductive portion CP1 and the negative-side conductive portion CM1. Therefore, the temperature measuring instrument 18 receives only the thermoelectromotive force generated at the rotor-side thermocouple 12 and the stator-side thermocouple 16 and can measure the difference in temperature between the measurement point 12J and the temperature measuring instrument 18.

In such a manner, the temperature detection structure 10 can reduce the influence of the temperature of the positive-side conductive portion CP1 interposed between the positive-side rotor-side contact RP1 and the positive-side stator-side contact FP1, and the negative-side conductive portion CM1 interposed between the negative-side rotor-side contact RM1 and the negative-side stator-side contact FM1. Therefore, the temperature detection structure 10 can measure the temperature with high accuracy. For example, even if the positive-side rotor-side electrode 4P and the positive-side stator-side electrode 5P are different in temperature, the temperature of the measurement point 12J can be measured with high accuracy.

Accordingly, the temperature detection structure 10 of the present embodiment can accurately measure the temperature of the measurement point 12J with a simple structure in which the positive-side rotor-side contact RP1, the negative-side rotor-side contact RM1, the positive-side stator-side contact FP1, and the negative-side stator-side contact FM1 are disposed in a uniform heat environment without uniformizing the temperature environment of the inside and outside of the rotating machinery 1.

In addition, the positive-side rotor-side contact RP1 and the negative-side rotor-side contact RM1 are disposed at the lower end 24a of the rotating shaft 24. The positive-side stator-side contact FP1 and the negative-side stator-side contact FM1 are disposed at the lower end 31b of the lower body 31. In addition, the lower ends 24a, 31b are disposed on substantially the same plane.

Accordingly, the positive-side rotor-side contact RP1, the negative-side rotor-side contact RM1, the positive-side stator-side contact FP1, and the negative-side stator-side contact FM1 are arranged in a overlapping position when viewed in the radial direction. In such a manner, the arrangement in a overlapping position when viewed in the radial direction is expressed as being overlapping in the radial direction in the present invention.

Therefore, the temperature detection structure 10 can provide the positive-side rotor-side contact RP1, the negative-side rotor-side contact RM1, the positive-side stator-side contact FP1, and the negative-side stator-side contact FM1 in a uniform heat environment with a simple structure.

In addition, the positive-side rotor-side contact RP1, the negative-side rotor-side contact RM1, the positive-side stator-side contact FP1, and the negative-side stator-side contact FM1 are disposed in the same uniform heat area S1. Accordingly, the temperature detection structure 10 can accurately measure temperature with a simple configuration.

In addition, the atmosphere has high heat insulation property. Therefore, the temperature detection structure 10 can prevent the heat generated by heat conduction or radiation from peripheral equipment and the power supply of the rotor-side electrode 4 and the stator-side electrode 5 from being transmitted to the positive-side rotor-side contact RP1, the negative-side rotor-side contact RM1, the positive-side stator-side contact FP1, and the negative-side stator-side contact FM1.

In addition, the positive-side measurement-point-side thermocouple conductor 12P of the rotor-side thermocouple 12 and the positive-side rotor-side dissimilar metal 13P are attached to the positive-side rotating plate 14P to configure the positive-side rotor-side contact RP1.

In addition, the negative-side measurement-point-side thermocouple conductor 12M of the rotor-side thermocouple 12 and the negative-side rotor-side dissimilar metal 13M are attached to the negative-side rotating plate 14M to configure the negative-side rotor-side contact RM1.

In addition, the positive-side temperature-measuring-instrument-side thermocouple conductor 16P of the stator-side thermocouple 16 and the positive-side stator-side dissimilar metal 15P are attached to the positive-side fixed plate 17P to configure the positive-side stator-side contact FP1.

In addition, the negative-side temperature-measuring-instrument-side thermocouple conductor 16M of the stator-side thermocouple 16 and the negative-side stator-side dissimilar metal 15M are attached to the negative-side fixed plate 17M to configure the negative-side stator-side contact FM1.

Accordingly, with the rotor 2 rotating relative to the stator 3, the temperature detection structure 10 can hold the respective positions of the positive-side rotor-side contact RP1, the negative-side rotor-side contact RM1, the positive-side stator-side contact FP1, and the negative-side stator-side contact FM1 to prevent movement of the positive-side rotor-side contact RP1, the negative-side rotor-side contact RM1, the positive-side stator-side contact FP1, and the negative-side stator-side contact FM1 due to rotation of the rotor 2, vibration of the equipment, or the like.

Further, for example, the positive-side rotor-side contact RP1 and the negative-side rotor-side contact RM1 are prevented from coming into contact with each other. This can ensure that the temperature detection structure 10 prevents electrical crossover from occurring.

In addition, the heat insulation portions 19 are provided between the rotor 2 and the positive-side rotating plate 14P, between the rotor 2 and the negative-side rotating plate 14M, between the stator 3 and the positive-side fixed plate 17P, and between the stator 3 and the negative-side fixed plate 17M. Therefore, the temperature detection structure 10 can prevent the heat from the rotor 2 from being transmitted to the positive-side rotor-side contact RP1 and the negative-side rotor-side contact RM1, and prevent the heat from the stator 3 from being transmitted to the positive-side stator-side contact FP1 and the negative-side stator-side contact FM1.

In addition, as the positive-side rotating plate 14P, the negative-side rotating plate 14M, the positive-side fixed plate 17P, and the negative-side fixed plate 17M are terminal blocks, which not only makes it easy to configure the positive-side rotor-side contact RP1, the negative-side rotor-side contact RM1, the positive-side stator-side contact FP1, and the negative-side stator-side contact FM1, but also ensures stable fixation. Further, the ease of attachment and detachment of the various conductors improves maintainability.

In addition, in the temperature detection structure 10, the use of the positive-side slip ring 9P and the negative-side slip ring 9M prevents abrasion, stabilizes electrical connection, and allows for temperature measurement with high accuracy.

In addition, the temperature detection structure 10 includes the positive-side slip ring 9P and the negative-side slip ring 9M stacked in the axial direction. That is, the positive-side slip ring 9P and the negative-side slip ring 9M are arranged so as to overlap each other when viewed in the axial direction. Additionally, the positive-side rotor-side contact RP1, the negative-side rotor-side contact RM1, the positive-side stator-side contact FP1, and the negative-side stator-side contact FM1 are also arranged so as to overlap the positive-side slip ring 9P and the negative-side slip ring 9M when viewed in the axial direction.

Accordingly, the temperature detection structure 10 can be configured compactly, and the positive-side rotor-side contact RP1, the negative-side rotor-side contact RM1, the positive-side stator-side contact FP1, and the negative-side stator-side contact FM1 can be arranged closer together than in a sixth embodiment as will be described later. Therefore, the temperature detection structure 10 can further improve the accuracy of temperature measurement.

Additionally, compared to the sixth embodiment in which a plurality of rotating shafts are provided, the temperature detection structure 10 requires only one rotating shaft, simplifying the structure.

Further, the temperature detection structure 10 utilizes the positive-side slip ring 9P and the negative-side slip ring 9M of the four stacked slip rings 9 that are located furthest from the measurement point 12J, that is, the heat source to be measured.

Therefore, in the positive-side conductive portion CP1 and the negative-side conductive portion CM1, heat is not likely to be transmitted by conduction or radiation from the heat source, particularly to the contact between the positive-side rotor-side dissimilar metal 13P and the positive-side rotor-side electrode 4P, the contact between the negative-side rotor-side dissimilar metal 13M and the negative-side rotor-side electrode 4M, the contact between the positive-side stator-side dissimilar metal 15P and the positive-side stator-side electrode 5P, and the contact between the negative-side stator-side dissimilar metal 15M and the negative-side stator-side electrode 5M.

Additionally, in the temperature detection structure 10, the uniform heat area S1 is provided at a farthest position from the measurement point 12J, that is, from the heat source to be measured, compared to the four stacked slip rings 9. Therefore, heat is less likely to be transmitted by conduction or radiation from the heat source to the uniform heat area S1.

In addition, the positive-side rotor-side dissimilar metal 13P, the negative-side rotor-side dissimilar metal 13M, the positive-side stator-side dissimilar metal 15P, and the negative-side stator-side dissimilar metal 15M are made of copper, which generates less thermoelectromotive force than the rotor-side thermocouple 12 and the stator-side thermocouple 16. Further, the positive-side rotor-side electrode 4P, the negative-side rotor-side electrode 4M, the positive-side stator-side electrode 5P, the negative-side stator-side electrode 5M, the positive-side roller current collector 60P, and the negative-side roller current collector 60M are made of a copper alloy, which generates less thermoelectromotive force than the rotor-side thermocouple 12 and the stator-side thermocouple 16.

Accordingly, the temperature detection structure 10 can further improve the accuracy of temperature measurement. For example, even if a slight temperature gradient occurs in the uniform heat area S1, the thermoelectromotive force generated in the positive-side conductive portion CP1 and the negative-side conductive portion CM1 is relatively small, and the influence on the measurement of the rotor-side thermocouple 12 and the stator-side thermocouple 16 is small.

Further, the positive-side rotor-side dissimilar metal 13P, the negative-side rotor-side dissimilar metal 13M, the positive-side stator-side dissimilar metal 15P, and the negative-side stator-side dissimilar metal 15M are made of copper, and the positive-side rotor-side electrode 4P, the negative-side rotor-side electrode 4M, the positive-side stator-side electrode 5P, the negative-side stator-side electrode 5M, the positive-side roller current collector 60P, and the negative-side roller current collector 60M are made of copper alloy. Compared to a case where these are made of the same metal as the thermocouples and compensating conductors, abrasion resistance is improved, facilitating reduction in manufacturing costs.

This is because the same metal as the thermocouples and compensating conductors has lower abrasion resistance and flexibility than copper and copper alloy, and is expensive.

In addition, for example, when the positive-side rotor-side electrode 4P, the positive-side stator-side electrode 5P, and the positive-side roller current collector 60P are made of the same material as the positive-side measurement-point-side thermocouple conductor 12P, and the negative-side rotor-side electrode 4M, the negative-side stator-side electrode 5M, and the negative-side roller current collector 60M are made of the same material as the negative-side measurement-point-side thermocouple conductor 12M, the different types of metals are applied to each slip ring, increasing the number of parts, which leads to not only an increase in manufacturing costs but also increased susceptibility to failures. The same applies to the positive-side rotor-side dissimilar metal 13P, the negative-side rotor-side dissimilar metal 13M, the positive-side stator-side dissimilar metal 15P, and the negative-side stator-side dissimilar metal 15M. In addition, the same applies to when the same metal as the compensating conductor of the target thermocouple type is applied instead of the same metal as the thermocouple conductor.

In addition, when copper or a copper alloy is used as the thermocouple conductor that constitutes the thermocouple, thermoelectromotive force is unlikely to be generated, and the accuracy of the temperature measurement is likely to be impaired.

Accordingly, it is obviously not practical to use the same metal for the thermocouple, the roller current collector, the inner peripheral electrode, and the outer peripheral electrode. On the other hand, the temperature detection structure 10 of the first embodiment is the best because it has a simple configuration, has sufficient functionality as a slip ring, and can measure temperature with high accuracy.

Incidentally, in the present embodiment, the description will be made assuming that the positive-side rotor-side dissimilar metal 13P, the negative-side rotor-side dissimilar metal 13M, the positive-side stator-side dissimilar metal 15P, and the negative-side stator-side dissimilar metal 15M are made of copper, and the positive-side rotor-side electrode 4P, the negative-side rotor-side electrode 4M, the positive-side stator-side electrode 5P, the negative-side stator-side electrode 5M, the positive-side roller current collector 60P, and the negative-side roller current collector 60M are made of copper alloy; however, the present invention is not limited thereto, and any metal having less thermoelectromotive force than the rotor-side thermocouple 12 and the stator-side thermocouple 16 may be made of, for example, silver or a silver alloy, and the type of metal may be changed as appropriate. Meanwhile, the positive-side conductive portion and the negative-side conductive portion are preferably configured with the same type of metals and arrangement.

In addition, in the temperature detection structure 10 of the present embodiment, the positive-side rotor-side contact RP1, the negative-side rotor-side contact RM1, the positive-side stator-side contact FP1, and the negative-side stator-side contact FM1 are disposed inside the cap 7, so that any of the positive-side rotor-side contact RP1, the negative-side rotor-side contact RM1, the positive-side stator-side contact FP1, and the negative-side stator-side contact FM1 can be prevented from coming into contact with other equipment or other conductors.

### {Second embodiment}

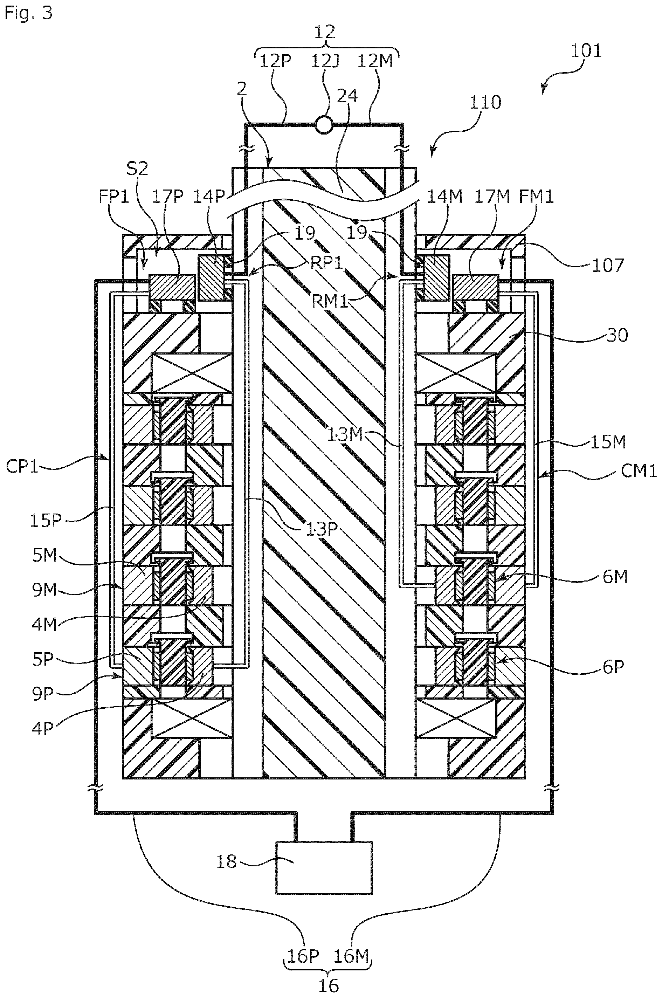

Next, a temperature detection structure according to a second embodiment of the present invention will be described with reference to FIG. 3. Incidentally, the same configurations as those illustrated in the first embodiment are designated by the same reference numerals and the duplicated description will be omitted.

In a temperature detection structure 110 in a rotating machinery 101 of the second embodiment, a cap 107 is fixed to the top of the upper body 30. In addition, a through-hole is formed in the center of the cap 107 in the radial direction, and the rotating shaft 24 and the rotor-side thermocouple 12 extend through the through-hole. The cap 107, together with the rotating shaft 24 and the upper body 30, defines a uniform heat area S2.

The positive-side rotating plate 14P and the negative-side rotating plate 14M in the temperature detection structure 110 are fixed to the outer peripheral surface of the rotating shaft 24 above the top of the upper body 30 via the heat insulation portions 19. The positive-side fixed plate 17P and the negative-side fixed plate 17M are fixed to the upper portion of the upper body 30 via the heat insulation portions 19. In addition, the positive-side rotating plate 14P, the negative-side rotating plate 14M, the positive-side fixed plate 17P, and the negative-side fixed plate 17M overlap each other in the radial direction.

In such a manner, the position in the axial direction at which the uniform heat area is provided may be changed as appropriate.

In addition, the positive-side rotating plate 14P and the negative-side rotating plate 14M are not limited to being disposed at the end of the rotating shaft 24 in the axial direction as described in the first embodiment; however, may be disposed on the outer peripheral surface of the rotating shaft 24 on the side of the end in the axial direction above the top of the upper body 30 as in the second embodiment, or may be disposed on a plate 402a protruding toward the radially outer side from the rotating shaft as in a fourth embodiment described below, as long as they are disposed in an appropriate position. The same applies to the positive-side fixed plate 17P and the negative-side fixed plate 17M.

Further, it is preferable that the positive-side rotating plate 14P and the negative-side rotating plate 14M are disposed on the same side in the axial direction as the side where the positive-side fixed plate 17P and the negative-side fixed plate 17M are disposed, so that they can be disposed in one uniform heat area, simplifying the configuration. In addition, it is more preferable that the positive-side rotating plate 14P and the negative-side rotating plate 14M are at least partially disposed on the same plane as the positive-side fixed plate 17P and the negative-side fixed plate 17M, so that they can be disposed in a compact uniform heat environment.

Incidentally, for example, the uniform heat area S1 of the first embodiment and the uniform heat area S2 of the second embodiment may be provided together. In such a configuration, for example, the positive-side rotor-side contact RP1 and the positive-side stator-side contact FP1 may be provided in the uniform heat area S1, and the negative-side rotor-side contact RM1 and the negative-side stator-side contact FM1 may be provided in the uniform heat area S2.

### {Third embodiment}

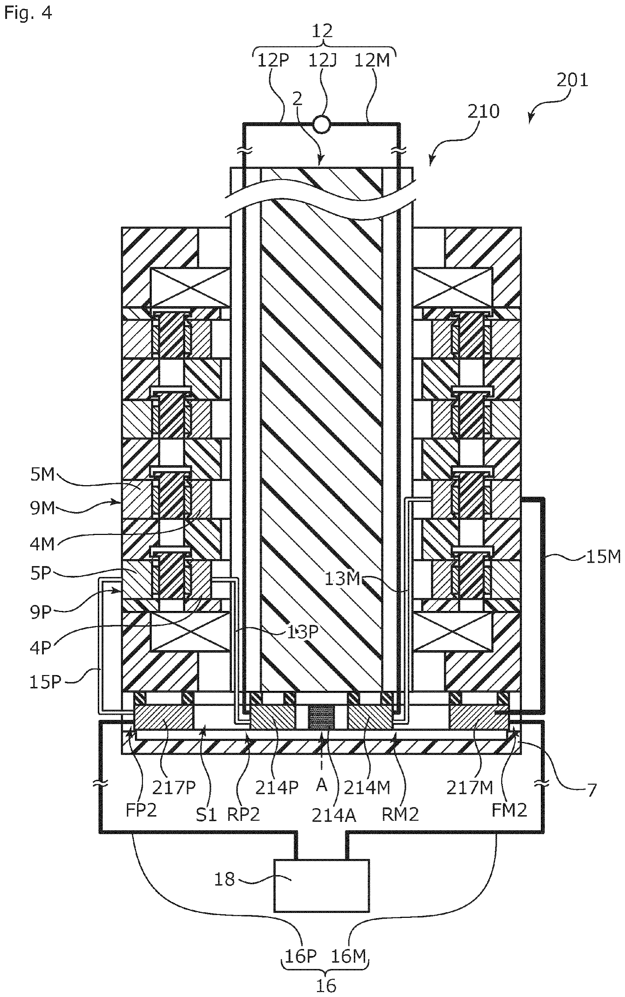

Next, a temperature detection structure according to a third embodiment of the present invention will be described with reference to FIGS. 4 to 6. Incidentally, the same configurations as those illustrated in the first embodiment are designated by the same reference numerals and the duplicated description will be omitted.

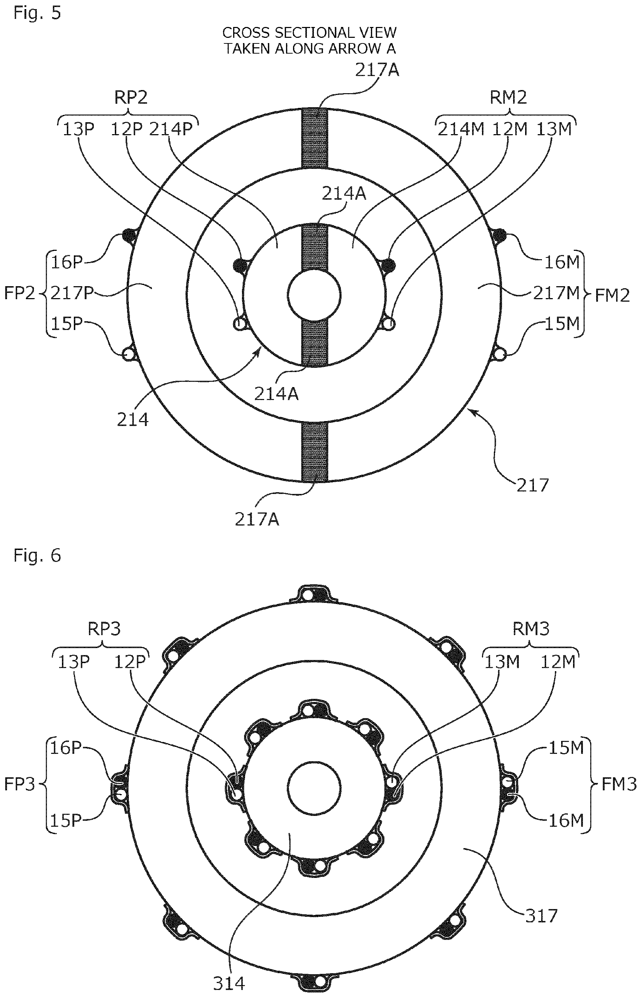

As illustrated in FIGS. 4 and 5, a temperature detection structure 210 in a rotating machinery 201 of the third embodiment includes an annular rotating plate 214 (see FIG. 5) and an annular fixed plate 217 (see FIG. 5). The rotating plate 214 and the fixed plate 217 overlap each other in the radial direction.

More specifically, the rotating plate 214 includes a positive-side metal plate 214P as a first rotating plate, a negative-side metal plate 214M as a second rotating plate, and two insulation plates 214A.

As illustrated in FIG. 5, the positive-side metal plate 214P and the negative-side metal plate 214M are metal plates formed into a half arc shape when viewed in the axial direction, and are integrally fixed with the insulation plates 214A interposed between the ends in the circumferential direction. Accordingly, electrical crossover is prevented between the positive-side metal plate 214P and the negative-side metal plate 214M.

Incidentally, even if the insulation plates 214A are not provided, the positive-side metal plate 214P and the negative-side metal plate 214M are provided individually opposite to each other in the circumferential direction, and the space between these plates in the circumferential direction is air, as in the first embodiment, there is no problem because electrical crossover between the positive-side metal plate 214P and the negative-side metal plate 214M is prevented. In this case, the air serves as an insulation portion.

The fixed plate 217 includes a positive-side metal plate 217P as a first fixed plate, a negative-side metal plate 217M as a second fixed plate, and two insulation plates 217A. In addition, the fixed plate 217 has a larger diameter than the rotating plate 214. The other configurations are the same as those of the rotating plate 214 and therefore are not described.

Incidentally, even if the insulation plates 217A are not provided, the positive-side metal plate 217P and the negative-side metal plate 217M are provided individually opposite to each other in the circumferential direction, and the space between these plates in the circumferential direction is air, as in the first embodiment, there is no problem because electrical crossover between the positive-side metal plate 217P and the negative-side metal plate 217M is prevented. In this case, the air serves as an insulation portion.

Accordingly, a contact where the positive-side measurement-point-side thermocouple conductor 12P of the rotor-side thermocouple 12 is soldered to the positive-side metal plate 214P, and a contact where the positive-side rotor-side dissimilar metal 13P is soldered to the positive-side metal plate 214P can be provided to configure a positive-side rotor-side connection portion RP2 as a first rotating connection portion in which the positive-side measurement-point-side thermocouple conductor 12P and the positive-side rotor-side dissimilar metal 13P are electrically connected through the positive-side metal plate 214P.

In addition, a contact where the positive-side temperature-measuring-instrument-side thermocouple conductor 16P of the stator-side thermocouple 16 is soldered to the positive-side metal plate 217P, and a contact where the positive-side stator-side dissimilar metal 15P is soldered to the positive-side metal plate 217P can be provided to configure a positive-side stator-side connection portion FP2 as a first fixed connection portion in which the positive-side temperature-measuring-instrument-side thermocouple conductor 16P and the positive-side stator-side dissimilar metal 15P are electrically connected through the positive-side metal plate 217P.

In addition, a contact where the negative-side measurement-point-side thermocouple conductor 12M of the rotor-side thermocouple 12 is soldered to the negative-side metal plate 214M, and a contact where the negative-side rotor-side dissimilar metal 13M is soldered to the negative-side metal plate 214M can be provided to configure a negative-side rotor-side connection portion RM2 as a second rotating connection portion in which the negative-side measurement-point-side thermocouple conductor 12M and the negative-side rotor-side dissimilar metal 13M are electrically connected through the negative-side metal plate 214M.

In addition, a contact where the negative-side temperature-measuring-instrument-side thermocouple conductor 16M of the stator-side thermocouple 16 is soldered to the negative-side metal plate 217M, and a contact where the negative-side stator-side dissimilar metal 15M is soldered to the negative-side metal plate 217M can be provided to configure a negative-side stator-side connection portion FM2 as a second fixed connection portion in which the negative-side temperature-measuring-instrument-side thermocouple conductor 16M and the negative-side stator-side dissimilar metal 15M are electrically connected through the negative-side metal plate 217M.

In such a manner, in a configuration including the positive-side metal plate 214P, the negative-side metal plate 214M, the positive-side metal plate 217P, and the negative-side metal plate 217M, the various conductors can be fixed thereto by soldering, thereby achieving stable fixation.

In addition, for example, in the positive-side metal plate 214P, the positive-side measurement-point-side thermocouple conductor 12P of the rotor-side thermocouple 12 and the positive-side rotor-side dissimilar metal 13P can be spaced apart in the circumferential direction. In such a manner, the positions at which the rotor-side thermocouple 12, the stator-side thermocouple 16, the positive-side rotor-side dissimilar metal 13P, the negative-side rotor-side dissimilar metal 13M, the positive-side stator-side dissimilar metal 15P, and the negative-side stator-side dissimilar metal 15M are fixed can be appropriately selected.

In addition, because the rotating plate 214 is annular, centrifugal force does not substantially act on the rotating plate 214 during rotation, as compared to a configuration in which centrifugal force acts individually on the positive-side rotating plate 14P and the negative-side rotating plate 14M that are separately provided opposite to each other in the circumferential direction, as in the first embodiment. On the other hand, in the configuration in which the positive-side rotating plate 14P and the negative-side rotating plate 14M are separately provided opposite to each other in the circumferential direction, as in the first embodiment, the force toward the radially outward direction acts individually on the positive-side rotating plate 14P and the negative-side rotating plate 14M during rotation.

Incidentally, the insulator may be air or may be changed as appropriate. For example, the positive-side metal plate 214P and the negative-side metal plate 214M may be spaced apart from each other. Even with such a configuration, electrical crossover can be prevented and the various conductors can be fixed thereto by soldering.

In addition, with reference to FIG. 6 illustrating a modification of the third embodiment, the first rotating plate and the second rotating plate may form a single rotating plate 314 made of an insulating material, and the first fixed plate and the second fixed plate may form a single fixed plate 317 made of an insulating material. Incidentally, in the present modification, the eight stacked slip rings 9 (not illustrated) are provided. In addition, the contacts are equiangularly arranged in FIG. 6, but they may be not equiangularly arranged. The same applies to any number of the stacked slip rings 9.

With such a configuration, for example, the positive-side rotor-side contact RP3 where the positive-side measurement-point-side thermocouple conductor 12P of the rotor-side thermocouple 12 and the positive-side rotor-side dissimilar metal 13P are directly soldered, and the negative-side rotor-side contact RM3 where the negative-side measurement-point-side thermocouple conductor 12M of the rotor-side thermocouple 12 and the negative-side rotor-side dissimilar metal 13M are directly soldered can be directly crimped or attached to the rotating plate 314 to prevent electrical crossover while preventing the positive-side rotor-side contact RP3 and the negative-side rotor-side contact RM3 from swinging. The same applies to when the positive-side stator-side contact FP3 and the negative-side stator-side contact FM3 are directly crimped or attached to the fixed plate 317.

In addition, even when, for example, another thermocouple is further disposed, the contacts can be held by only the single rotating plate 314 and the single fixed plate 317. In such a manner, the temperature detection structure in the present modification can be easily configured while providing a high degree of freedom in arrangement of the positive-side rotor-side contact RP3, the negative-side rotor-side contact RM3, the positive-side stator-side contact FP3, and the negative-side stator-side contact FM3.

### {Fourth embodiment}

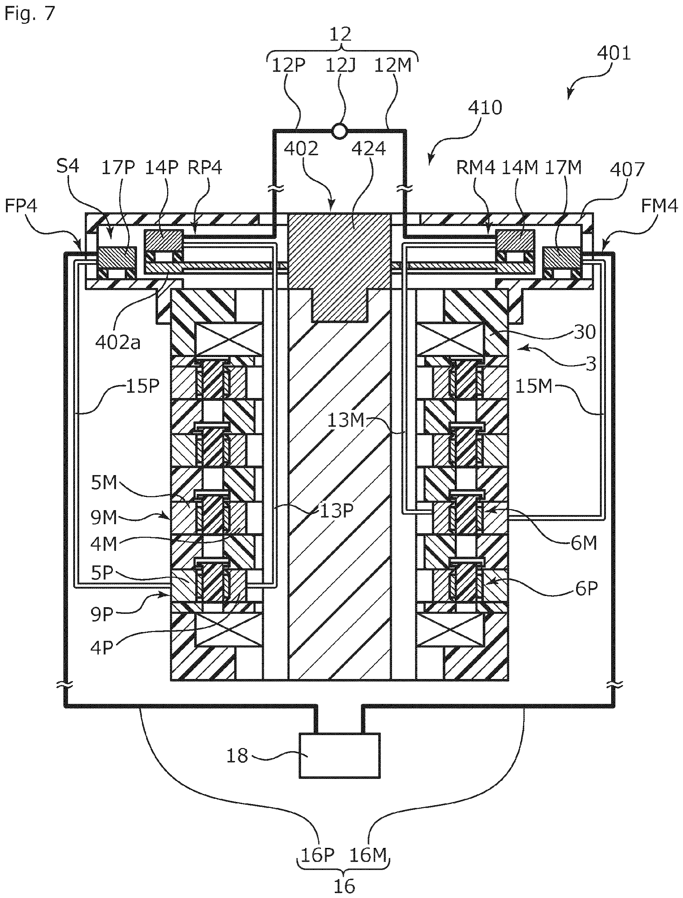

Next, a temperature detection structure according to a fourth embodiment of the present invention will be described with reference to FIG. 7. Incidentally, the same configurations as those illustrated in the first embodiment are designated by the same reference numerals and the duplicated description will be omitted.

A rotor 402 of a rotating machinery 401 of the fourth embodiment includes the annular plate 402a. The plate 402a has a larger diameter than the upper body 30 and is supported by a rotating shaft 424 so as to be rotatable integrally with the rotor 402.

The positive-side rotating plate 14P and the negative-side rotating plate 14M in the temperature detection structure 410 are fixed to the top of the plate 402a located on the radially outer side of the outer peripheral surface of the upper body 30.

In addition, a cap 407 surrounds the plate 402a and protrudes on the radially outer side of the upper body 30 so that the positive-side fixed plate 17P and the negative-side fixed plate 17M can be disposed on the radially outer side of the plate 402a.

A uniform heat area S4 defined by the cap 407 extends on the radially outer side of the stator 3. In addition, the positive-side rotating plate 14P, the negative-side rotating plate 14M, and the positive-side fixed plate 17P and the negative-side fixed plate 17M are disposed on the radially outer side of the stator 3. That is, the positive-side rotor-side contact RP4, the negative-side rotor-side contact RM4, the positive-side stator-side contact FP4, and the negative-side stator-side contact FM4 are disposed on the radially outer side of the stator 3.

In addition, the positive-side rotating plate 14P, the negative-side rotating plate 14M, the positive-side fixed plate 17P, and the negative-side fixed plate 17M overlap each other in the radial direction.

### {Fifth embodiment}

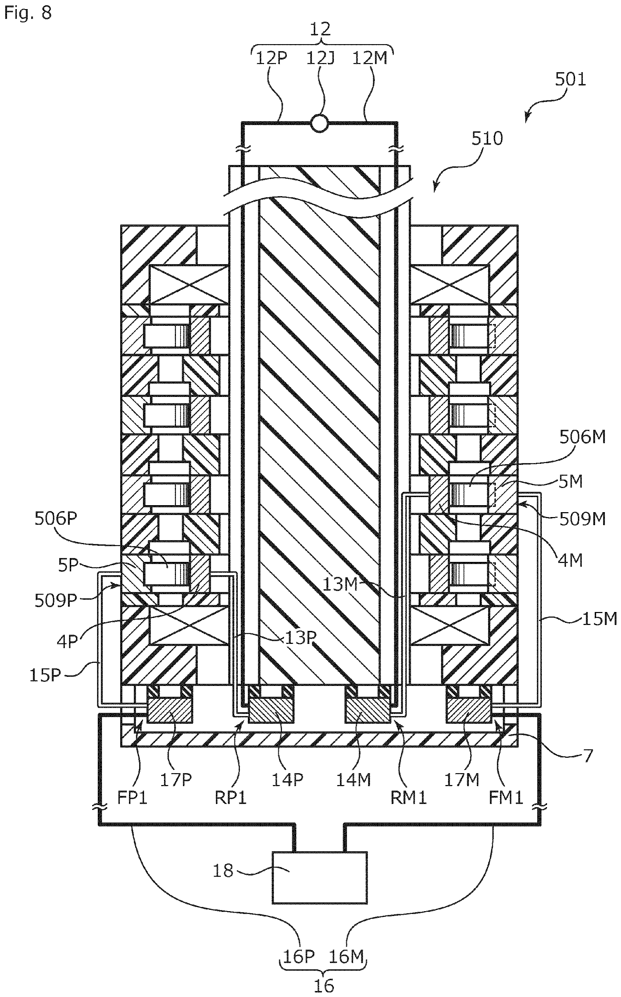

Next, a temperature detection structure according to a fifth embodiment of the present invention will be described with reference to FIG. 8. Incidentally, the same configurations as those illustrated in the first embodiment are designated by the same reference numerals and the duplicated description will be omitted.

A positive-side slip ring 509P as a first slip ring in a rotating machinery 501 of the fifth embodiment is provided with a positive-side cantilever 506P as a first connector. The positive-side cantilever 506P is supported at one end by the positive-side stator-side electrode 5P and is in contact with the positive-side rotor-side electrode 4P.

Similarly, a negative-side slip ring 509M as a second slip ring is provided with a negative-side cantilever 506M as a second connector. The other configurations are substantially the same configurations as the positive-side slip ring 509P.

In a temperature detection structure 510, thermoelectric current is input to the temperature measuring instrument 18 through the positive-side slip ring 509P and the negative-side slip ring 509M.

In such a manner, the slip ring in the present invention is not limited to be provided with the roller-type current collectors described in the first embodiment as the connectors; however, the slip ring may be provided with a cantilever as in the fifth embodiment, a brush, or mercury. The connectors may also be configured so that electrodes such as flat plates or plated patterns provided on the opposing surfaces of the rotating ring and the fixed ring come into sliding contact with each other, and may be changed as appropriate.

### {Sixth embodiment}

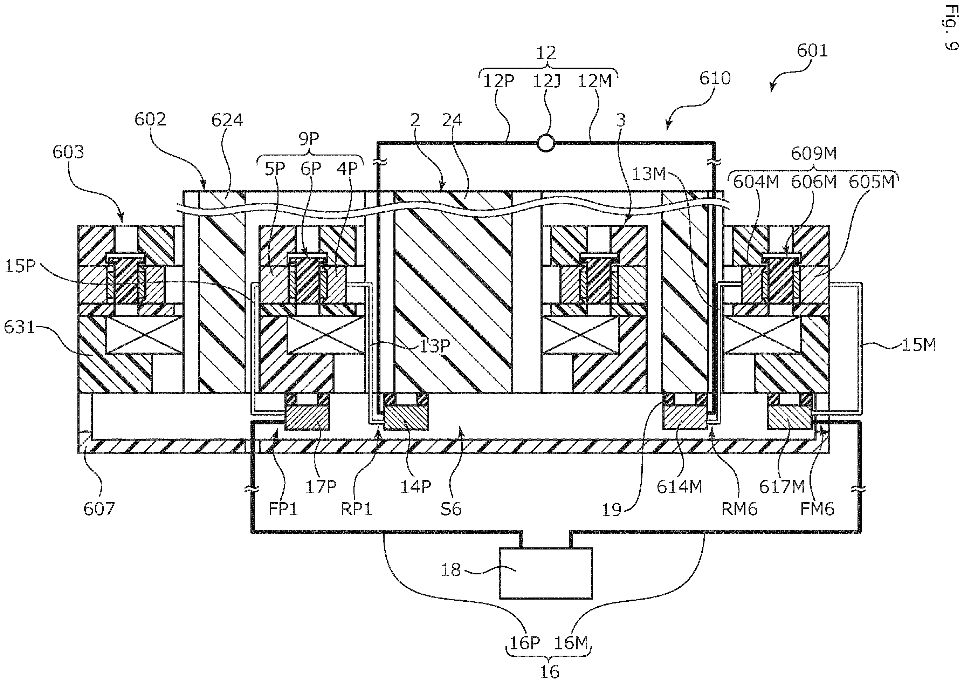

Next, a temperature detection structure according to a sixth embodiment of the present invention will be described with reference to FIG. 9. Incidentally, the same configurations as those illustrated in the first embodiment are designated by the same reference numerals and the duplicated description will be omitted.

A rotating machinery 601 of the sixth embodiment mainly includes the rotor 2 on the radially inner side, the stator 3 on the radially inner side, a rotor 602 on the radially outer side, and a stator 603 on the radially outer side.

The rotor 602 on the radially outer side is provided with a cylindrical rotating shaft 624. The rotor 2 and the stator 3 on the radially inner side are disposed on the radially inner side of the rotating shaft 624.

A negative-side rotating plate 614M as a second rotating plate is fixed to the rotating shaft 624.

The rotor 602 on the radially outer side and the stator 603 on the radially outer side, together with a plurality of negative-side connectors 606M, constitute a negative-side slip ring 609M as a second slip ring. The negative-side slip ring 609M is composed of a negative-side rotor-side electrode 604M as a second rotating electrode in the rotor 602, a negative-side stator-side electrode 605M as a second fixed electrode in the stator 603, and the plurality of negative-side connectors 606M as second connectors.

In addition, a negative-side fixed plate 617M as a second fixed plate is fixed to a lower body 631 of the stator 603 on the radially outer side.

In addition, a cap 607 is fixed to the lower body 631. The positive-side rotating plate 14P, the negative-side rotating plate 614M, the positive-side fixed plate 17P, and the negative-side fixed plate 617M are disposed in a uniform heat area S6 on the inner side of the cap 607.

In a temperature detection mechanism 610 of the sixth embodiment, the negative-side measurement-point-side thermocouple conductor 12M of the rotor-side thermocouple 12 and the negative-side rotor-side dissimilar metal 13M are connected to the negative-side rotating plate 614M to configure a negative-side rotor-side contact RM6. In addition, the negative-side stator-side dissimilar metal 15M and the negative-side temperature-measuring-instrument-side thermocouple conductor 16M of the stator-side thermocouple 16 are connected to the negative-side fixed plate 617M to configure a negative-side stator-side contact FM6.

In such a manner, the slip rings may be stacked in the radial direction. This configuration can shorten the dimension of the rotating machinery in the axial direction.

In addition, more rotating plates and fixed plates can be disposed in the uniform heat area than in the first embodiment.

The first to sixth embodiments of the present invention have been described above with reference to the drawings; however, the specific configurations are not limited to the first to sixth embodiments, and changes or additions that are made without departing from the scope of the present invention are included in the present invention.

For example, in the first to sixth embodiments, a configuration in which the temperature detection structure is applied to a semiconductor manufacturing machine as rotating equipment has been described; however, the present invention is not limited thereto and may be applied to any rotating equipment as appropriate.

In addition, in the first to sixth embodiments, a configuration in which the rotor is disposed on the radially inner side and the stator is disposed on the radially outer side has been described; however, the present invention is not limited thereto, and a configuration in which the stator is disposed on the radially inner side and the rotor is disposed on the radially outer side may be applied. That is, the inner peripheral electrode may be a stator-side electrode and the outer peripheral electrode may be a rotor-side electrode.

In addition, in the first to sixth embodiments, a configuration in which the rotating machinery is disposed in a vertical orientation with its axis aligned in a vertical direction has been described; however, the present invention is not limited thereto, and the rotating machinery may be disposed in a horizontal orientation with its axis aligned in a horizontal direction.

In addition, in the first to sixth embodiments, a configuration in which the measurement-point-side thermocouple conductor and the rotating-side metal are attached to the rotating plate, and the temperature-measuring-instrument-side thermocouple conductor and the fixed-side metal are attached to the fixed plate has been described; however, the present invention is not limited thereto, and the rotating plate or the fixed plate may not be provided, and the rotating contact formed by directly electrically connecting the measurement-point-side thermocouple conductor and the rotating-side metal by soldering or the like, and the fixed contact formed by directly electrically connecting the temperature-measuring-instrument-side thermocouple conductor and the fixed-side metal by soldering or the like may be suspended in midair.

In addition, in the first to sixth embodiments, a configuration in which the measurement-point-side thermocouple conductor and the rotating-side metal are attached to the rotating plate, and the temperature-measuring-instrument-side thermocouple conductor and the fixed-side metal are attached to the fixed plate has been described; however, the present invention is not limited thereto, and the measurement-point-side thermocouple conductor and the rotating-side metal may be directly attached to the rotor, and the temperature-measuring-instrument-side thermocouple conductor and the fixed-side metal may be directly attached to the stator.

In addition, in the first to sixth embodiments, a configuration in which respective heat insulation portions are provided between the rotating plate and the rotor, and between the fixed plate and the stator has been described; however, the present invention is not limited thereto, and the heat insulation portions may not be provided.

### {REFERENCE SIGNS LIST}

1 Rotating machinery
2 Rotor
3 Stator
4M Negative-side rotor-side electrode (second rotating electrode)
4P Positive-side rotor-side electrode (first rotating electrode)
5M Negative-side stator-side electrode (second fixed electrode)
5P Positive-side stator-side electrode (first fixed electrode)
6M Negative-side connector (second connector)
6P Positive-side connector (first connector)
8 Bearing
9M Negative-side slip ring (second slip ring)
9P Positive-side slip ring (first slip ring)
10 Temperature detection structure
12 Rotor-side thermocouple (measurement-point-side thermocouple)
12J Measurement point
12M Negative-side measurement-point-side thermocouple conductor (second measurement-point-side thermocouple conductor)
12P Positive-side measurement-point-side thermocouple conductor (first measurement-point-side thermocouple conductor)
13M Negative-side rotor-side dissimilar metal (second rotating-side metal)
13P Positive-side rotor-side dissimilar metal (first rotating-side metal)
14M Negative-side rotating plate (second rotating plate)
14P Positive-side rotating plate (first rotating plate)
15M Negative-side stator-side dissimilar metal (second fixed-side metal)
15P Positive-side stator-side dissimilar metal (first fixed-side metal)
16 Stator-side thermocouple (temperature-measuring-instrument-side thermocouple)
16M Negative-side temperature-measuring-instrument-side thermocouple conductor (second temperature-measuring-instrument-side thermocouple conductor)
16P Positive-side temperature-measuring-instrument-side thermocouple conductor (first temperature-measuring-instrument-side thermocouple conductor)
17M Negative-side fixed plate (second fixed plate)
17P Positive-side fixed plate (first fixed plate)
18 Temperature measuring instrument
19 Heat insulation portion
60M Negative-side roller current collector (second current collector)
60P Positive-side roller current collector (first current collector)
101, 201, 401 to 601 Rotating machinery
110, 210, 410 to 610 Temperature detection structure
214A Insulation plate (insulation portion)
214M Negative-side rotating plate (second rotating plate)
214P Positive-side rotating plate (first rotating plate)
217A Insulation plate (insulation portion)
217M Negative-side fixed plate (second fixed plate)
217P Positive-side fixed plate (first fixed plate)
314 Rotating plate
317 Fixed plate
402, 602 Rotor
506M Negative-side cantilever (second connector)
506P Positive-side cantilever (first connector)
509M Negative-side slip ring (second slip ring)
509P Positive-side slip ring (first slip ring)
603 Stator
604M Negative-side rotor-side electrode (second rotating electrode)
605M Negative-side stator-side electrode (second fixed electrode)
606M Negative-side connector (second connector)
609M Negative-side slip ring (second slip ring)
614M Negative-side rotating plate (second rotating plate)
614P Positive-side rotating plate (first rotating plate)
617M Negative-side fixed plate (second fixed plate)
617P Positive-side fixed plate (first fixed plate)
CM1 Negative-side conductive portion (second conductive portion)
CP1 Positive-side conductive portion (first conductive portion)
FM1, FM3, FM4, FM6 Negative-side stator-side contact (second fixed connection portion)
FM2 Negative-side stator-side connection portion (second fixed connection portion)
FP1, FP3, FP4 Positive-side stator-side contact (first fixed connection portion)
FP2 Positive-side stator-side connection portion (first fixed connection portion)
RM1, RM3, RM4, RM6 Negative-side rotor-side contact (second rotating connection portion)
RM2 Negative-side rotor-side connection portion (second rotating connection portion)
RP1, RP3, RP4 Positive-side rotor-side contact (first rotating connection portion)
RP2 Positive-side rotor-side connection portion (first rotating connection portion)
S1, S2, S4, S6 Uniform heat area

## Claims

1. A temperature detection structure, comprising:
a temperature-measuring-instrument-side thermocouple including a first temperature-measuring-instrument-side thermocouple conductor and a second temperature-measuring-instrument-side thermocouple conductor to be electrically connected to a temperature measuring instrument;
a first fixed electrode to which the first temperature-measuring-instrument-side thermocouple conductor is electrically connected;
a second fixed electrode to which the second temperature-measuring-instrument-side thermocouple conductor is electrically connected;
a measurement-point-side thermocouple including a first measurement-point-side thermocouple conductor and a second measurement-point-side thermocouple conductor and having a measurement point at which they are connected;
a first rotating electrode to which the first measurement-point-side thermocouple conductor is electrically connected, the first rotating electrode disposed so as to be rotatable relative to the first fixed electrode;
a second rotating electrode to which the second measurement-point-side thermocouple conductor is electrically connected, the second rotating electrode disposed so as to be rotatable relative to the second fixed electrode;
a first connector electrically connecting the first fixed electrode and the first rotating electrode; and
a second connector electrically connecting the second fixed electrode and the second rotating electrode; wherein
the temperature detection structure further comprises
a first rotating-side metal electrically connecting the first measurement-point-side thermocouple conductor and the first rotating electrode,
a second rotating-side metal electrically connecting the second measurement-point-side thermocouple conductor and the second rotating electrode,
a first fixed-side metal electrically connecting the first temperature-measuring-instrument-side thermocouple conductor and the first fixed electrode, and
a second fixed-side metal electrically connecting the second temperature-measuring-instrument-side thermocouple conductor and the second fixed electrode, and
the temperature detection structure is provided with a first rotating connection portion at which the first measurement-point-side thermocouple conductor and the first rotating-side metal are connected, a second rotating connection portion at which the second measurement-point-side thermocouple conductor and the second rotating-side metal are connected, a first fixed connection portion at which the first temperature-measuring-instrument-side thermocouple conductor and the first fixed-side metal are connected, and a second fixed connection portion at which the second temperature-measuring-instrument-side thermocouple conductor and the second fixed-side metal are connected.

2. The temperature detection structure according to claim 1, wherein
the first fixed connection portion and the second fixed connection portion are disposed on one end side in an axial direction of a stator including the first fixed electrode and the second fixed electrode, and
the first rotating connection portion and the second rotating connection portion are disposed on one end side in the axial direction of a rotor including the first rotating electrode and the second rotating electrode.

3. The temperature detection structure according to claim 1, wherein
the first rotating connection portion, the second rotating connection portion, the first fixed connection portion, and the second fixed connection portion are provided within a space in communication with an atmosphere or in the atmosphere.

4. The temperature detection structure according to claim 2, wherein
the first measurement-point-side thermocouple conductor and the first rotating-side metal are attached to a first rotating plate fixed to the rotor,
the second measurement-point-side thermocouple conductor and the second rotating-side metal are attached to a second rotating plate fixed to the rotor,
the first temperature-measuring-instrument-side thermocouple conductor and the first fixed-side metal are attached to a first fixed plate fixed to the stator, and
the second temperature-measuring-instrument-side thermocouple conductor and the second fixed-side metal are attached to a second fixed plate fixed to the stator.

5. The temperature detection structure according to claim 4, wherein
respective heat insulation portions are provided between the rotor and the first rotating plate, between the rotor and the second rotating plate, between the stator and the first fixed plate, and between the stator and the second fixed plate.

6. The temperature detection structure according to claim 4, wherein
the first rotating plate, the second rotating plate, the first fixed plate, and the second fixed plate are made of metal, and
respective insulation portions are provided between the first rotating plate and the second rotating plate, and between the first fixed plate and the second fixed plate.

7. The temperature detection structure according to claim 4, wherein
the first rotating plate and the second rotating plate form a single rotating plate made of an insulating material, and
the first fixed plate and the second fixed plate form a single fixed plate made of an insulating material.

8. The temperature detection structure according to claim 1, wherein
the first connector includes a first current collector rotatable while in contact with an outer peripheral surface of the first rotating electrode and an inner peripheral surface of the first fixed electrode,
the second connector includes a second current collector rotatable while in contact with an outer peripheral surface of the second rotating electrode and an inner peripheral surface of the second fixed electrode,
the first rotating electrode, the first fixed electrode, and the first current collector constitute a first slip ring, and the second rotating electrode, the second fixed electrode, and the second current collector constitute a second slip ring.

9. The temperature detection structure according to claim 8, wherein
the first slip ring and the second slip ring are stacked in the axial direction.

10. The temperature detection structure according to any one of claims 1 to 9, wherein
the first rotating-side metal, the second rotating-side metal, the first fixed-side metal, and the second fixed-side metal are metals having less thermoelectromotive force than the first measurement-point-side thermocouple conductor, the second measurement-point-side thermocouple conductor, the first temperature-measuring-instrument-side thermocouple conductor, and the second temperature-measuring-instrument-side thermocouple conductor.
